# FASCICULE DE BREVET EUROPEEN

(11) **EP 4 119 428 B1**
(45) Date de publication et mention de la délivrance du brevet: **05.11.2025**
(21) Numéro de dépôt: 22184728.8
(22) Date de dépôt: 13.07.2022
(51) Int. Cl.: B62D 59/04, B62D 13/00, B62D 13/06

(54) **ENSEMBLE ROULANT COMPRENANT UN ENGIN TRACTEUR ET UNE REMORQUE ET PROCÉDÉ DE PILOTAGE D'UN TEL ENSEMBLE ROULANT**
ROLLANORDNUNG MIT EINER ZUGMASCHINE UND EINEM ANHÄNGER UND VERFAHREN ZUR LENKUNG EINER SOLCHEN ROLLANORDNUNG
WHEELED ASSEMBLY COMPRISING A TRACTOR VEHICLE AND A TRAILER AND METHOD FOR CONTROLLING SUCH A WHEELED ASSEMBLY

(30) Priorité: 15.07.2021 FR 2107651
(43) Date de publication de la demande: 18.01.2023
(73) Titulaire: Arquus, 78000 Versailles (FR)
(72) Inventeur: DELOUMEAU, François, 75015 PARIS (FR)
(74) Mandataire: Lavoix

(56) Documents cités:
- EP-A1- 3 069 961
- DE-A1- 102017 125 662
- DE-A1- 102019 205 156
- US-A1- 2009 198 425

## Description

La présente invention concerne un ensemble roulant comprenant un engin tracteur et une remorque et un procédé de pilotage d'un tel ensemble roulant.

Dans le domaine des ensembles roulants comprenant un engin tracteur et une remorque attelée à l'engin tracteur, il est connu d'équiper la remorque de roues motrices pour aider à la manœuvrabilité de l'ensemble roulant.

Les documents EP 3 069 961 A1 et DE 10 2019 205156 A1 décrivent des exemples d'ensemble roulant comprenant un engin tracteur et une remorque dont la trajectoire est corrigée grâce à des roues motrices de la remorque.

Il est connu de DE 10 2019 202 781 A1 de contrôler la trajectoire d'une telle remorque en adaptant le couple moteur fourni par chaque roue motrice de la remorque en fonction, d'une part, de l'angle de braquage de l'engin tracteur et, d'autre part, de l'angle entre le véhicule tracteur et la remorque, calculé à partir de la vitesse de rotation des roues motrices de la remorque.

Un tel ensemble roulant ne peut cependant pas évoluer en milieu complexe, comme par exemple dans un milieu déstructuré présentant de nombreux obstacles ou dans un milieu présentant une adhérence variable, car il ne permet pas de détecter avec précision la trajectoire de la remorque. Ceci est, notamment, rédhibitoire pour un véhicule militaire équipé d'une remorque et évoluant sur un terrain qui peut par exemple être très accidenté lors de combats ou après un bombardement.

C'est à ces inconvénients qu'entend plus particulièrement remédier l'invention en proposant un ensemble roulant amélioré.

À cet effet, l'invention concerne un procédé de pilotage d'un ensemble roulant tel que défini à la revendication 1.

Grâce à l'invention, le dispositif de mesure permet de connaître avec précision l'angle de rotation de la remorque par rapport à l'engin tracteur, sans avoir recours à des calculs indirects basés sur la rotation des roues qui pourrait être faussée par des pertes d'adhérence. Ceci permet de corriger la trajectoire de la remorque, y compris en milieu complexe, lorsque l'adhérence des roues de la remorque n'est pas pérenne. En effet, l'angle de rotation de la remorque par rapport à l'engin tracteur étant mesuré, il ne dépend pas de la vitesse de rotation des roues de la remorque, qui dépend elle-même de l'adhérence de ces roues au sol.

Des aspects avantageux mais non obligatoires du procédé de pilotage d'un ensemble roulant conforme à l'invention sont spécifiés aux revendications 2 à 6.

L'invention sera mieux comprise et d'autres avantages de celle-ci apparaitront plus clairement à la lumière de la description qui va suivre d'un mode de réalisation d'un ensemble roulant et d'un procédé de pilotage de cet ensemble roulant, conformes à l'invention, donnée uniquement à titre d'exemple et faite en référence aux dessins annexés dans lesquels :
[Fig. 1] La figure 1 est une représentation schématique d'un ensemble roulant conforme à l'invention, circulant en marche arrière ; et
[Fig. 2] La figure 2 est une représentation schématique de la trajectoire de l'ensemble roulant de la figure 1 circulant en marche avant.

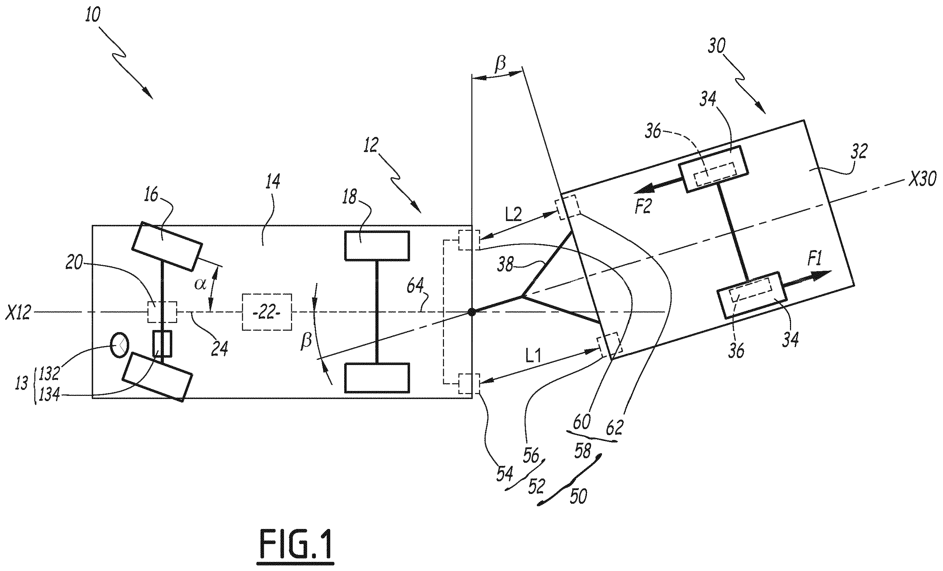

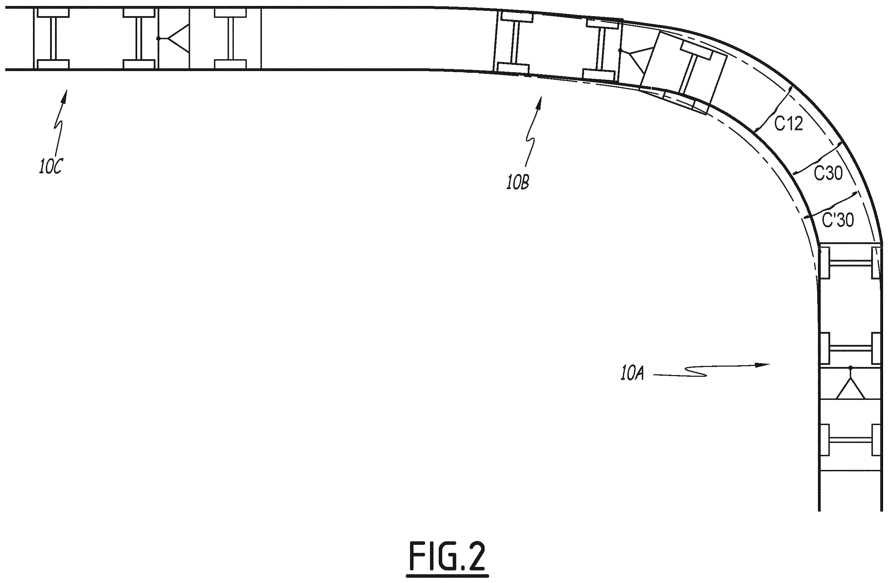

Un ensemble roulant 10 est représenté aux figures 1 et 2. Cet ensemble roulant 10 comprend un engin tracteur 12.

L'engin tracteur 12 est un véhicule motorisé autonome, tel que par exemple une voiture ou un camion.

L'engin tracteur 12 comprend un châssis 14, un poste de conduite 13 qui comprend un volant 132 et un siège conducteur 134, des roues directrices 16 pilotées à partir du volant 132 et des roues non-directrices 18.

Dans l'exemple représenté aux figures 1 et 2, l'engin tracteur 12 comprend deux roues directrices 16 et deux roues non-directrices 18.

Les roues 16 sont dites « directrices » car elles peuvent braquer, c'est-à-dire être orientées, sous l'effet d'une commande reçue du volant 132, de manière à modifier la trajectoire de l'engin tracteur 12.

On définit ainsi un angle α de braquage de l'engin tracteur 12, qui correspond à l'angle formé entre la direction dans laquelle les roues directrices 16 sont orientées et une direction parallèle à un axe longitudinal X12 de l'engin tracteur 12, qui correspond en pratique à la direction du déplacement de l'engin tracteur 12 lorsque l'engin tracteur se déplace en ligne droite.

Ainsi, lorsque l'engin tracteur 12 se déplace en ligne droite, l'angle α est nul.

Lorsque l'angle α est non-nul, alors l'engin tracteur 12 tourne dans la direction d'orientation des roues directrices 16.

L'engin tracteur 12 comprend un capteur 20 d'angle de braquage, qui permet de mesurer l'angle α.

Le capteur 20 d'angle de braquage est par exemple un capteur mesurant l'orientation du volant 132 contrôlant l'orientation des roues directrices 16, un capteur mesurant un signal de commande envoyé aux roues directrices 16 ou un capteur mesurant l'angle d'une des roues directrices 16 par rapport au châssis 14.

Avantageusement, les roues directrices 16 et/ou les roues non-directrices 18 sont des roues motrices de l'engin tracteur 12. Les roues motrices sont alors soit reliées à un moteur non-représenté de l'engin tracteur 12, soit comprennent chacune un moteur non-représenté, par exemple un moteur électrique.

L'engin tracteur 12 comprend également une unité de contrôle 22.

L'unité de contrôle 22 permet de contrôler l'engin tracteur 12 en fonction de commandes de pilotage fournies par un conducteur de l'engin tracteur, non représenté. L'unité de contrôle 22 est par exemple un ordinateur de bord.

Avantageusement, le conducteur de l'engin tracteur 12 fournissant des commandes de pilotage à l'unité de contrôle 22 est installé physiquement à bord de l'engin tracteur, dans le poste de conduite 13.

Alternativement, le conducteur peut également contrôler l'engin tracteur 12 à distance, c'est-à-dire téléguider l'engin tracteur 12.

Avantageusement, l'unité de contrôle 22 peut contrôler la vitesse de rotation des roues motrices de l'engin tracteur 12.

En outre, la valeur de l'angle α mesurée par le capteur 20 d'angle de braquage est transmise à l'unité de contrôle 22. À la figure 1, cette transmission est représentée à titre d'exemple par l'intermédiaire d'un câble de transmission de données 24.

L'ensemble roulant 10 comprend également une remorque 30.

La remorque 30 comprend un châssis 32 et des roues motrices 34.

Dans l'exemple représenté, la remorque 30 comprend deux roues motrices 34.

Les roues 34 sont dites « motrices », car chaque roue 34 comprend un moteur électrique 36 qui permet de délivrer un couple moteur à la roue.

Ainsi, la remorque 30 comprend autant de moteurs électriques 36 que de roues motrices 34.

La remorque 30 est en outre attelée à l'engin tracteur 12 à l'aide d'un attelage 38.

L'attelage 38 permet de lier mécaniquement la remorque 30 à l'engin tracteur 12, de sorte que l'engin tracteur 12, lors de son déplacement en marche avant ou en marche arrière, entraîne la remorque 30.

L'attelage 38 est, par exemple, un crochet d'attelage, une boule d'attelage ou tout système manuel ou automatique assurant la liaison mécanique entre le tracteur et la remorque.

De préférence, l'attelage 38 connecte également électriquement l'engin tracteur 12 à la remorque 30, afin de transmettre par exemple de l'énergie électrique et/ou des informations.

Les moteurs électriques 36 de la remorque 30 sont contrôlés par l'unité de contrôle 22.

L'unité de contrôle 22 échange des données avec chaque moteur électrique 36, par exemple pour envoyer des commandes aux roues électriques 36, ou pour récupérer des informations de fonctionnement des roues électriques 36, telles que leur vitesse de rotation.

L'échange de donnée entre l'unité de contrôle 22 et les roues électriques 36 s'effectue par l'intermédiaire d'un système de transmission d'informations, non-représenté.

Ce système de transmission d'information est, par exemple, un réseau physique, tel qu'un câble électrique, qui passe par l'attelage 38, ou un réseau sans fil, tel qu'une liaison radio sécurisée.

Lorsque l'engin tracteur 12 est en mouvement et que les moteurs électriques 36 des roues motrices 34 de la remorque 30 ne sont pas en fonctionnement, la remorque 30 est tractée, de manière connue, par l'engin tracteur 12. La trajectoire de la remorque 30 dépend alors de la trajectoire de l'engin tracteur, de manière passive.

Lorsque les moteurs électriques 36 sont mis en fonctionnement, la trajectoire de la remorque 30 est alors modifiée, de sorte à ne pas dépendre uniquement de la trajectoire de l'engin tracteur.

Des exemples d'une telle modification de la trajectoire de la remorque 30 par les moteurs électriques 36 sont détaillés ci-après.

En pratique, le moteur électrique 36 d'une roue motrice 34 permet d'appliquer un couple à cette roue motrice 34. Le couple appliqué à la roue 34 est soit moteur, c'est-à-dire qu'il permet d'accélérer la vitesse de rotation de la roue 34, soit freineur, c'est-à-dire qu'il permet de ralentir la vitesse de rotation de la roue 34.

On définit un sens de circulation de l'ensemble roulant 10 en marche avant comme étant un sens de circulation de l'ensemble roulant dans lequel l'engin tracteur 12 avance dans la direction opposée de la remorque 30, c'est-à-dire que l'engin tracteur tire la remorque et ne la pousse pas.

On définit un sens de circulation de l'ensemble roulant 10 en marche arrière comme étant un sens de circulation de l'ensemble roulant dans lequel l'engin tracteur 12 avance dans la direction de la remorque 30.

Dans la suite de la description, les termes de « gauche » et « droite » s'entendent en vue de dessus et par rapport au sens de circulation de l'ensemble roulant 10 en marche avant.

L'ensemble roulant comprend en outre dispositif 50 de mesure. Ce dispositif de mesure permet, avec l'unité de contrôle 22, de mesurer l'angle de rotation β de la remorque 30 par rapport à l'engin tracteur 12.

Cet angle de rotation β correspond en pratique à l'angle formé entre l'axe longitudinal X30 de la remorque 30 et l'axe longitudinal X12 de l'engin tracteur 12.

Lorsque l'ensemble roulant 10 se déplace en ligne droite, l'angle de rotation β est nul.

Dans l'exemple de réalisation de la figure 1, le dispositif 50 comprend un premier capteur de distance 52, qui comprend un émetteur 54 et un récepteur 56, et un deuxième capteur de distance 58, qui comprend un émetteur 60 et un récepteur 62.

En pratique, les émetteurs 54 et 60 sont disposés à l'arrière de l'engin tracteur 12, c'est-à-dire sur la face de l'engin tracteur 12 faisant face à la remorque 30 et depuis laquelle l'attelage 38 s'étend.

En pratique, les récepteurs 56 et 62 sont disposés à l'avant de la remorque 30, c'est-à-dire sur la face de la remorque 30 faisant face à l'engin tracteur 12 et depuis laquelle l'attelage 38 s'étend.

Ainsi, les émetteurs 54 et 60 d'une part et les récepteurs 56 et 62 d'autre part sont situés en regard les uns des autres.

Le premier capteur 52 mesure la distance entre l'émetteur 54 et le récepteur 56, notée « L1 », et le deuxième capteur 58 mesure la distance entre l'émetteur 60 et le récepteur 62, notée « L2 ».

Avantageusement, la mesure de distance entre un émetteur et un récepteur est effectuée en faisant émettre un signal à l'émetteur, tel que par exemple un signal sonore ultrasonique, ou encore un signal lumineux, puis en mesurant le temps de trajet entre l'émetteur et le récepteur. La distance entre un émetteur et un récepteur est ensuite calculée à partir du temps de trajet mesuré et de la vitesse de propagation du signal émis.

En pratique, comme visible à la figure 1, le premier capteur 52 est disposé sur la gauche de l'ensemble roulant 10 et le deuxième capteur 58 est disposé sur la droite de l'ensemble roulant.

Lorsque l'ensemble roulant 10 se déplace en ligne droite, c'est-à-dire lorsque l'angle de braquage α des roues directrices 16 de l'engin tracteur 12 est nul, les distances L1 et L2 sont égales.

Lorsque l'ensemble roulant 10 effectue un virage, c'est-à-dire lorsque l'angle de braquage α est non-nul, les distances L1 et L2 ne sont alors plus égales. La distance L1 ou L2 située du côté intérieur du virage est alors inférieure à la distance L1 ou L2 située du côté extérieur du virage.

Dans l'exemple illustré à la figure 1, la distance L2 mesurée par le deuxième capteur 58 situé à droite de l'ensemble roulant 10, est inférieure à la distance L1 mesurée par le premier capteur 52 situé à gauche de l'ensemble roulant 10, du fait de l'angle de braquage des roues directrices 16.

Les distances L1 et L2 mesurées par les capteurs 52 et 58 sont transmises à l'unité de contrôle 22. À la figure 1, cette transmission est représentée à titre d'exemple par l'intermédiaire d'un câble de données 64.

À partir des valeurs de distance L1 et L2 mesurées par le dispositif de mesure 50, et des dimensions de l'engin tracteur 12 et de la remorque 30, qui sont connues, l'unité de contrôle 22 calcule de manière précise l'angle β de rotation de la remorque 30 par rapport à l'engin tracteur 12.

Par exemple, lorsque la face arrière de l'engin tracteur 12 est perpendiculaire à son axe longitudinal X12 et que la face avant de la remorque 30 est perpendiculaire à son axe longitudinal X30, l'angle entre ces faces est égal à l'angle β et le dispositif 50 permet de mesurer cet angle de façon quasi-directe.

Dans le cas où la face arrière de l'engin tracteur 12 n'est pas perpendiculaire à son axe longitudinal X12 ou que la face avant de la remorque 30 n'est pas perpendiculaire à son axe longitudinal X30, le résultat de la mesure effectuée avec le dispositif 50 est adapté en fonction de la géométrie exacte de l'ensemble roulant. Un étalonnage du dispositif peut avoir lieu lorsque l'ensemble roulant avance en ligne droite.

Il est avantageux de mesurer l'angle β de rotation de la remorque 30 par rapport à l'engin tracteur 12 à l'aide du dispositif de mesure 50, car la mesure obtenue est alors précise et indépendante des paramètres de fonctionnement de la remorque 30.

En particulier, cette mesure est indépendante de la vitesse de rotation des roues motrices 34 de la remorque 30, généralement très variable, particulièrement en milieu complexe, et qui ne permet donc pas de calculer l'angle β avec précision.

Par « milieu complexe », on entend tout milieu sur lequel l'ensemble roulant 10 se déplace et qui est déstructuré, c'est-à-dire qui présente de nombreux obstacles tels que des bosses, des trous ou des rochers, ou qui présente une adhérence variable, par exemple du fait de la présence de boue ou de verglas. Un milieu complexe peut également être dénommé « terrain accidenté ». Un tel milieu se retrouve dès que l'ensemble roulant 10 sort du milieu structuré (routes, chemins balisés) ou circule dans des conditions dégradées du milieu structuré (chute de neige, dégradation de la chaussée, verglas, etc.).

La remorque 30 est une remorque dite « autoportée », c'est-à-dire que le poids de la remorque 30 est majoritairement supporté par les roues motrices 34, et que l'attelage 38 ne transmet à l'engin tracteur 12 qu'une faible partie du poids de la remorque 30 selon les directives règlementaires actuellement en vigueur.

On décrit à présent plus en détail un procédé de pilotage de l'ensemble roulant 10.

Ce procédé de pilotage de l'ensemble roulant 10 permet de corriger la trajectoire de la remorque 30, en fonction de la trajectoire de l'engin tracteur 12.

Le procédé de pilotage est en pratique exécuté par l'unité de contrôle 22 de l'ensemble roulant.

Pour cela, le procédé de pilotage de l'ensemble roulant 10 comprend au moins les étapes suivantes :
a) Une première étape de mesure de l'angle α de braquage des roues directrices 16 de l'engin tracteur 12.
   Au cours de cette première étape, le capteur 20 d'angle de braquage mesure l'angle de braquage α des roues directrices 16 de l'engin tracteur 12, puis transmet cette mesure à l'unité de contrôle 22.
b) Une deuxième étape de détermination de la trajectoire de l'engin tracteur 12 de l'ensemble roulant 10.

Au cours de cette deuxième étape, l'unité de contrôle 22 détecte si l'ensemble roulant 10 se déplace en marche avant ou en marche arrière.

Cette détection du sens de la marche est par exemple établie en fonction du sens de rotation des roues 16 et/ou 18 de l'engin tracteur 12.

Ensuite, toujours au cours de la deuxième étape, l'unité de contrôle 22 détermine la trajectoire de l'engin tracteur 12, à partir du sens de marche de l'ensemble roulant 10, de la vitesse de l'engin tracteur 12 et de l'angle de braquage α des roues directrices 16 de l'engin tracteur.

c) Une troisième étape de mesure de l'angle de rotation β de la remorque 30 par rapport à l'engin tracteur 12.

Au cours de cette troisième étape, le dispositif de mesure 50 mesure les distances L1 et L2 puis transmet ces mesures de distance à l'unité de contrôle 22.

Ensuite, l'unité de contrôle 22 calcule l'angle de rotation β de la remorque 30 par rapport à l'engin tracteur 12 comme décrit ci-dessus. Ainsi, l'angle de rotation β est mesuré indirectement par le dispositif 50.

d) Une quatrième étape de détermination de la trajectoire de la remorque 30 de l'ensemble roulant 10.

Au cours de cette quatrième étape, l'unité de contrôle 22 détermine la trajectoire de la remorque 30, à partir de la trajectoire de l'engin tracteur 12 déterminée au cours de l'étape b) et de l'angle de rotation β de la remorque 30 déterminé au cours de l'étape c).

e) Une cinquième étape de correction de la trajectoire de la remorque 30 de l'ensemble roulant 10.

Au cours de cette cinquième étape, l'unité de contrôle 22 corrige la trajectoire de la remorque 30 en fonction de la trajectoire de la remorque déterminée au cours de l'étape d) et de la trajectoire de l'engin tracteur 12 déterminée au cours de l'étape b).

L'ordre des étapes a) à e) du procédé de pilotage peut être différent. Notamment, les étapes b) et c) peuvent être inversées de sorte à mesurer les angles α et β avant de déterminer les trajectoires de l'engin tracteur 12 et de la remorque 30.

Avantageusement, les cinq étapes a) à e) du procédé de pilotage sont exécutées de manière cyclique, en temps réel, par l'unité de contrôle 22. La fréquence d'itération des étapes a) à e) est fonction de la vitesse de déplacement de l'engin tracteur.

De préférence, la correction de trajectoire effectuée au cours de la cinquième étape du procédé de pilotage consiste à modifier la trajectoire de la remorque 30 de sorte à ce que cette trajectoire soit identique à la trajectoire de l'engin tracteur 12.

En pratique, cette correction de la trajectoire de la remorque 30 est réalisée en modifiant les couples moteurs appliqués par les moteurs électriques 36 aux roues motrices 34 de la remorque 30.

Ainsi, l'unité de contrôle 22 corrige la trajectoire de la remorque 30 en modifiant la commande de pilotage du moteur électrique 36 de chaque roue motrice 34 de la remorque en fonction des angles de braquage α et de rotation β.

De préférence, lorsque l'ensemble roulant 10 se déplace en ligne droite, c'est-à-dire lorsqu'aucune correction de la trajectoire de la remorque 30 n'est requise, les moteurs électriques 36 délivrent un couple nul aux roues 34 de la remorque. Ainsi, le déplacement de la remorque 30 est entraîné uniquement par le déplacement de l'engin tracteur 12 et les roues 34 tournent sans être motrices.

Deux exemples de correction de la trajectoire de la remorque 30 sont illustrés aux figures 1 et 2.

À la figure 1, l'ensemble roulant 10 se déplace en marche arrière, c'est-à-dire que l'engin tracteur 12 pousse la remorque 30 en reculant.

En outre, les roues directrices 16 de l'engin tracteur 12 sont braquées vers la droite, c'est-à-dire que l'engin tracteur tourne vers son côté droit. En d'autres termes, la trajectoire de l'engin tracteur 12 est assimilable à un arc de cercle dont le centre est situé sur la droite de l'ensemble roulant.

Dans cet exemple, au cours de l'étape e), l'unité de contrôle 22 corrige la trajectoire de la remorque 30 en envoyant une commande de pilotage corrigée, ou modifiée aux moteurs électriques 36 conduisant à l'application d'un couple moteur ou freineur sur chaque roue motrice 34. Ces couples moteurs ou freineurs sont équivalents à l'application d'une force sur les roues motrices.

Dans l'exemple, une force F1 est appliquée sur la roue motrice 34 située à gauche de la remorque 30 et une force F2 est appliquée sur la roue motrice 34 située à droite de la remorque.

Pour permettre à la remorque 30 de s'inscrire dans la trajectoire de l'engin tracteur 12, c'est-à-dire un arc de cercle dont le centre est situé sur la droite de l'ensemble roulant, le couple appliqué à la roue motrice gauche est moteur, c'est-à-dire que la force F1 est dirigée dans le sens de déplacement de l'ensemble roulant 10, conduisant cette roue à accélérer, et le couple appliqué à la roue motrice droite est freineur, c'est-à-dire que la force F2 est dirigée à l'opposé du sens de déplacement de l'ensemble roulant, conduisant cette roue à ralentir.

Avantageusement, la valeur absolue des forces F1 et F2 est adaptée par l'unité de contrôle 22 pour contrôler la trajectoire de la remorque 30 avec précision. Ainsi, selon la correction devant être appliquée à la trajectoire de la remorque, la valeur absolue de la force F2 peut être supérieure, ou égale, à la valeur absolue de la force F1 ou vice versa suivant l'adhérence rencontrée.

Les forces F1 et F2 conduisent la remorque 30 à tourner vers sa droite, de sorte à suivre la même trajectoire que l'engin tracteur 12. La remorque 30 anticipe alors la trajectoire de l'engin tracteur 12.

Comme l'ensemble roulant 10 se déplace en marche arrière, la remorque 30 se déplace devant l'engin tracteur 12, dans le sens de déplacement de l'ensemble roulant. Ainsi, on dit que la remorque 30 anticipe la trajectoire de l'engin tracteur 12 car la trajectoire de la remorque 30 est modifiée de sorte à se déplacer dans un couloir identique au couloir qu'empruntera l'engin tracteur 12, bien que la remorque emprunte ce couloir avant l'engin tracteur.

Ce procédé de pilotage est particulièrement avantageux lorsque l'ensemble roulant 10 se déplace en marche arrière. En effet, il est connu que manœuvrer une remorque attelée à un engin tracteur en marche arrière est complexe. Une mauvaise manœuvre d'un ensemble roulant en marche arrière peut conduire à la mise en portefeuille de la remorque, c'est-à-dire à un retournement de la remorque de telle sorte que l'orientation de la remorque soit inversée. Le procédé de pilotage de l'invention permet donc d'éviter une telle mise en portefeuille.

Ceci est particulièrement important dans le cas où il n'est pas possible de dételer la remorque 30 de l'engin tracteur 12 pour une manœuvre en marche arrière, ce qui est le cas sur un théâtre d'opérations militaires où le conducteur ou les passagers de l'engin tracteur ne doivent pas sortir de cet engin, sauf à être exposés à des tirs ennemis.

À la figure 2, l'ensemble roulant 10 se déplace en marche avant, c'est-à-dire que l'engin tracteur 12 précède la remorque 30 en la tirant.

En outre, l'ensemble roulant 10 suit une trajectoire qui consiste à effectuer un virage sur sa gauche, d'environ 90 degrés. Pour représenter l'ensemble de cette trajectoire, l'ensemble roulant est représenté simultanément en trois positions différentes.

La première position correspond au démarrage du virage vers la gauche de l'ensemble roulant 10. Dans cette position, l'ensemble roulant est référencé « 10A »

Dans la deuxième position, l'ensemble roulant 10 est représenté au cours de son virage vers la gauche. Les roues directrices 16 de l'engin tracteur 12 sont alors tournées vers la gauche. Dans cette position, l'ensemble roulant est référencé « 10B ».

La troisième position correspond à une trajectoire en ligne droite, après que l'ensemble roulant 10 ait terminé sa rotation vers la gauche. Dans cette position, l'ensemble roulant est référencé « 10C ».

Le couloir C12 dans lequel l'engin tracteur 12 se déplace au cours de sa trajectoire est représenté par deux courbes continues.

Le couloir C'30 dans lequel la remorque 30 se déplacerait au cours de sa trajectoire, dans le cas où la trajectoire de la remorque 30 ne serait pas corrigée par le procédé de pilotage de l'invention, est représenté par deux courbes pointillées.

On remarque que ces deux couloirs ne sont pas superposés, c'est-à-dire que sans correction, la trajectoire de la remorque 30 diffère de la trajectoire de l'engin tracteur 12. Notamment, la trajectoire de la remorque 30 est décalée vers l'intérieur du virage, par rapport à la trajectoire de l'engin tracteur 12.

Ainsi, dans cet exemple d'ensemble roulant 10 se déplaçant en marche avant, le procédé de pilotage de l'invention permet de corriger la trajectoire de la remorque 30 de sorte à ce qu'elle soit identique à la trajectoire de l'engin tracteur 12.

Grâce au procédé de pilotage de l'invention, après correction de la trajectoire de la remorque 30 par action des moteurs électriques 36 sur les roues motrices 34, commandée par l'unité de contrôle 22, le couloir C30 dans lequel la remorque 30 se déplace est identique au couloir C12 dans lequel l'engin tracteur 12 se déplace.

Dans un autre exemple non-représenté, lorsque l'ensemble roulant 10 se déplace en ligne droite, les moteurs électriques 36 appliquent des couples moteur et freineur aux roues 34 de sorte à compenser des oscillations de la remorque 30 et à maintenir la remorque 30 en ligne droite. De telles oscillations apparaissent généralement lorsque l'ensemble roulant se déplace à haute vitesse et sont couramment appelées « mises en lacet ».

Grâce au procédé de pilotage de l'invention et à la précision du dispositif de mesure 50, la trajectoire de la remorque 30 est corrigée avec précision en temps réel de sorte à être identique à la trajectoire de l'engin tracteur 12, que l'ensemble roulant 10 se déplace en marche avant ou en marche arrière.

Ainsi, le procédé de pilotage de l'ensemble roulant 10 décrit ci-avant est efficace pour piloter l'ensemble roulant 10, y-compris en milieu complexe.

De plus, le procédé de pilotage de l'invention est mis en œuvre de manière autonome par l'unité de contrôle 22, sans intervention du conducteur de l'engin tracteur 12, ce qui est avantageux.

Cela évite par exemple de complexifier la conduite de l'ensemble roulant 10. Un conducteur n'étant pas formé à la manœuvre de remorques peut alors conduire l'ensemble roulant 10 sans précautions particulières, puisque la trajectoire de la remorque 30 s'adapte de manière autonome au pilotage de l'engin tracteur.

En variante non-représentée de l'invention, la transmission de la valeur d'angle α depuis le capteur d'angle 20 vers l'unité de contrôle 22 est réalisée sans fil, par exemple par liaison radio.

En variante non-représentée de l'invention, l'engin tracteur 12 comprend un nombre différent de roues directrices 16, par exemple quatre roues directrices 16.

En variante non-représentée de l'invention, l'engin tracteur 12 comprend un nombre différent de roues non-directrices 18, par exemple quatre roues non-directrices 18.

En variante non-représentée de l'invention, l'engin tracteur 12 comprend uniquement des roues directrices 16, par exemple quatre roues directrices 16. Dans une telle variante, l'engin tracteur 12 comprend par exemple un essieu avant avec roues directrices et un essieu arrière avec roues directrices. Les roues directrices de l'essieu arrière peuvent être actionnées dans le même sens ou dans un sens opposé par rapport aux roues directrices de l'essieu avant. Dans cette variante, le conducteur de l'engin tracteur 12 peut alors contrôler la direction de l'engin tracteur selon deux stratégies distinctes : dans une première stratégie, les roues de l'essieu avant et les roues de l'essieu arrière sont braquées dans deux directions opposées, ce qui permet de réduire le rayon de braquage de l'engin tracteur ; et dans une deuxième stratégie, les roues de l'essieu avant et les roues de l'essieu arrière sont braquées dans la même direction, par exemple en étant parallèles entre elles, ce qui permet à l'engin tracteur de se déplacer en crabe. De préférence, lorsque l'engin tracteur 12 se déplace en marche arrière selon cette deuxième stratégie, alors la trajectoire de la remorque 30 est corrigée à l'aide des roues motrices 34, sur la base des angles de braquage α et de rotation β, de sorte que la remorque suive une trajectoire parallèle à la trajectoire selon laquelle l'engin tracteur se déplace.

En variante non-représentée de l'invention, les roues directrices 16 de l'engin tracteur 12 sont des roues motrices.

En variante non-représentée de l'invention, la remorque 30 comprend un nombre différent de roues motrices 34, par exemple quatre roues motrices 34. Dans une telle variante, l'engin tracteur 12 comprend par exemple un essieu avant avec roues motrices et un essieu arrière avec roues motrices.

Dans cette variante, le conducteur de l'engin tracteur 12 peut avantageusement choisir son mode de déplacement entre trois modes de déplacement distincts : dans un premier mode, seules les roues de l'essieu avant contribuent au déplacement du véhicule tracteur, les roues de l'essieu arrière étant alors suiveuses ; dans un deuxième mode, seules les roues de l'essieu arrière contribuent au déplacement du véhicule tracteur, les roues de l'essieu avant étant alors suiveuses ; dans un troisième mode, les roues des essieux avant et arrière contribuent simultanément au déplacement du véhicule tracteur.

En variante non-représentée de l'invention, la remorque 30 comprend également des roues non-motrices, qui ne comprennent pas de moteur électrique.

En variante non-représentée de l'invention, les moteurs électriques 36 qui délivrent un couple moteur aux roues motrices 34 ne sont pas dans les roues 34 et sont reliés aux roues 34 par un arbre de transmission. Dans cette variante, un moteur 36 étant associé à une roue motrice 34, on dit que chaque roue motrice 34 comprend un moteur électrique 36.

En variante non-représentée de l'invention, les récepteurs 56 et 62 sont remplacés par des réflecteurs, de sorte que les signaux émis par les émetteurs 54 et 60 sont réfléchis par les réflecteurs, puis détectés par les émetteurs 54 et 60. Ainsi, les capteurs 52 et 58 mesurent le temps de trajet d'un aller-retour d'un signal entre l'émetteur et le réflecteur. La distance entre un émetteur et un réflecteur est ensuite calculée à partir du temps de trajet mesuré et de la vitesse de propagation du signal émis.

En variante non-représentée de l'invention, le dispositif de mesure 50 comprend deux capteurs 52 et 58 sans récepteurs, configurés pour mesurer respectivement la distance L1 et la distance L2 uniquement à partir d'un émetteur, par exemple en mesurant la distance entre un émetteur et le point le plus proche de la remorque 30.

En variante non-représentée de l'invention, le dispositif de mesure 50 de l'angle de rotation β de la remorque 30 par rapport à l'engin tracteur 12 comprend un capteur d'angle disposé dans l'attelage 38, au lieu des premier capteur 52 et deuxième capteur 58. Dans ce cas, la mesure de l'angle est directe et ne nécessite pas de calcul dans l'unité de contrôle 22.

En variante non-représentée de l'invention, le calcul de l'angle β à partir des mesures réalisées par le dispositif de mesure 50 est effectué par une deuxième unité de contrôle, distincte de l'unité de contrôle 22. De préférence, cette deuxième unité de contrôle est disposée dans la remorque 30 et communique avec l'unité de contrôle 22, soit au travers d'un câble de données, soit par liaison sans fil.

En variante non-représentée de l'invention, lorsque l'ensemble roulant 10 se déplace en ligne droite, les moteurs électriques 36 de la remorque 30 délivrent tous un couple moteur identique aux roues motrices 34. Ainsi, dans cette variante, la remorque 30 n'est pas seulement tractée par l'engin tracteur 12, mais contribue activement au déplacement de l'ensemble roulant 10. Cette configuration est particulièrement avantageuse pour améliorer les performances de l'ensemble roulant 10, par exemple lorsque l'ensemble roulant 10 franchit une pente importante.

Dans cette variante, lorsqu'une correction de trajectoire de la remorque 30 est requise, par exemple lors d'un virage vers la droite en marche arrière, de manière analogue à l'exemple de la figure 1, alors les moteurs électriques 36 délivrent chacun un couple moteur aux roues motrices 34, correspondant alors à deux forces F1 et F2 dirigées dans le sens de circulation de l'ensemble roulant 10, mais de valeur absolue différente. La différence de couple moteur appliqué aux roues motrices 34 permet alors de faire tourner la remorque 30 de manière à corriger sa trajectoire.

En outre, une telle correction permet également de stabiliser la trajectoire de la remorque 30 lorsque l'ensemble roulant 10 se déplace en ligne droite, pour éviter des mises en lacet de la remorque.

En variante non-représentée de l'invention, lorsque l'ensemble roulant 10 se déplace en ligne droite et en descente, les moteurs électriques 36 de la remorque 30 délivrent tous un couple freineur identique aux roues motrices 34 afin d'aider l'ensemble roulant 10 à contrôler sa vitesse de descente.

Dans cette variante, lorsqu'une correction de trajectoire de la remorque 30 est requise, alors les moteurs électriques 36 délivrent chacun un couple freineur aux roues motrices 34, correspondant alors à deux forces F1 et F2 dirigées dans le sens opposé au sens de circulation de l'ensemble roulant 10, mais de valeur absolue différente. La différence de couple freineur appliqué aux roues motrices 34 permet alors de faire tourner la remorque 30 de manière à corriger sa trajectoire.

En outre, une telle correction permet également de stabiliser la trajectoire de la remorque 30 lorsque l'ensemble roulant 10 se déplace en ligne droite, pour éviter des mises en lacet de la remorque.

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. Procédé de pilotage d'un ensemble roulant (10), l'ensemble roulant (10) comprenant au moins :
- un engin tracteur (12) comprenant au moins deux roues directrices (16) et un capteur (20) d'angle de braquage (α) des roues directrices ; et
- une remorque (30) configurée pour être attelée à l'engin tracteur à l'aide d'un attelage (38), la remorque comprenant au moins deux roues motrices (34), chaque roue motrice comprenant un moteur électrique (36) contrôlé par une unité de contrôle (22),
l'ensemble roulant (10) comprenant également un dispositif (50) de mesure de l'angle de rotation (β) de la remorque (30) par rapport à l'engin tracteur (12),
l'unité de contrôle étant configurée pour corriger la trajectoire de la remorque (30) en modifiant la commande de pilotage du moteur électrique (36) de chaque roue motrice (34) de la remorque en fonction de l'angle de braquage (α) des roues directrices (16) de l'engin tracteur (12) et en fonction de l'angle de rotation (β) de la remorque par rapport à l'engin tracteur,
ce procédé de pilotage étant exécuté par l'unité de contrôle (22) et comprenant au moins les étapes suivantes :
a) mesure de l'angle de braquage (α) des roues directrices (16) de l'engin tracteur (12) de l'ensemble roulant (10) ;
b) détermination de la trajectoire de l'engin tracteur (12).
c) mesure de l'angle de rotation (β) de la remorque (30) par rapport à l'engin tracteur (12) ;
d) détermination de la trajectoire de la remorque (30) de l'ensemble roulant (10) ; et
e) correction de la trajectoire de la remorque (30) sur la base des trajectoires déterminées aux étapes b) et d).
**caractérisé en ce que** le procédé de pilotage est mis en œuvre lorsque l'ensemble roulant (10) se déplace en marche arrière, pour que la remorque (30) anticipe la trajectoire de l'engin tracteur (12).

2. Procédé de pilotage d'un ensemble roulant (10) selon la revendication 1, **caractérisé en ce que** le dispositif (50) de mesure de l'angle de rotation (β) de la remorque (30) par rapport à l'engin tracteur (12) comprend au moins deux capteurs (52, 58) de distance, chaque capteur de distance mesurant une distance (L1, L2) entre l'engin tracteur et la remorque, et **en ce que** l'unité de contrôle (22) calcule l'angle de rotation (β) de la remorque (30) par rapport à l'engin tracteur (12) à partir des distances (L1, L2) mesurées par les capteurs (52, 58) de distance du dispositif de mesure (50).

3. Procédé de pilotage d'un ensemble roulant (10) selon la revendication 1, **caractérisé en ce que** le dispositif (50) de mesure de l'angle de rotation (β) de la remorque (30) par rapport à l'engin tracteur (12) comprend un capteur d'angle disposé dans l'attelage (38).

4. Procédé de pilotage d'un ensemble roulant (10) selon l'une quelconque des revendications 1 à 3, **caractérisé en ce que** à l'étape e), la correction de la trajectoire de la remorque (30) est effectuée par le moteur électrique (36) de chaque roue motrice (34) en appliquant un couple moteur ou un couple freineur à ladite roue motrice.

5. Procédé de pilotage d'un ensemble roulant (10) selon l'une quelconque des revendications 1 à 4, **caractérisé en ce que** les étapes a) à e) sont mises en œuvre en temps réel par l'unité de contrôle (22).

6. Procédé de pilotage d'un ensemble roulant (10) selon l'une quelconque des revendications 1 à 5, **caractérisé en ce que** les étapes a) à e) sont mises en œuvre sans intervention d'un conducteur de l'engin tracteur (12) de l'ensemble roulant (10).

## Patentansprüche

1. Steuerverfahren einer Fahrvorrichtung (10), die Fahrvorrichtung (10) umfasst mindestens:
- eine Zugmaschine (12), umfassend mindestens zwei lenkbare Räder (16) und einen Sensor (20) für den Lenkwinkel (α) der lenkbaren Räder; und
- einen Anhänger (30), der konfiguriert ist, um mittels einer Kupplung (38) an die Zugmaschine angehängt zu werden, der Anhänger umfasst mindestens zwei Antriebsräder (34), jedes Antriebsrad umfasst einen Elektromotor (36), der von einer Steuereinheit (22) gesteuert wird,
die Fahrvorrichtung (10) umfasst auch eine Vorrichtung (50) zum Messen des Drehwinkels (β) des Anhängers (30) in Bezug auf die Zugmaschine (12),
wobei die Steuereinheit konfiguriert ist, um den Kurs des Anhängers (30) zu korrigieren, indem sie den Steuerbefehl des Elektromotors (36) von jedem Antriebsrad (34) des Anhängers abhängig von dem Lenkwinkel (α) der lenkbaren Räder (16) der Zugmaschine (12) und abhängig von dem Drehwinkel (β) des Anhängers in Bezug auf die Zugmaschine ändert,
wobei dieses Steuerverfahren von der Steuereinheit (22) ausgeführt wird und mindestens die folgenden Schritte umfasst:
a) Messen des Lenkwinkels (α) der lenkbaren Räder (16) der Zugmaschine (12) der Fahrvorrichtung (10);
b) Bestimmung des Fahrkurses der Zugmaschine (12);
c) Messen des Drehwinkels (β) des Anhängers (30) in Bezug auf die Zugmaschine (12);
d) Bestimmung des Fahrkurses des Anhängers (30) der Fahrvorrichtung (10); und
e) Korrektur des Fahrkurses des Anhängers (30) basierend auf den Fahrkursen, die in den Schritten b) und d) bestimmt wurden,
**dadurch gekennzeichnet, dass** das Steuerverfahren durchgeführt wird, wenn sich die Fahrvorrichtung (10) rückwärts bewegt, damit der Anhänger (30) den Fahrkursen der Zugmaschine (12) antizipiert.

2. Steuerverfahren einer Fahrvorrichtung (10) nach Anspruch 1, **dadurch gekennzeichnet, dass** die Vorrichtung (50) zum Messen des Drehwinkels (β) des Anhängers (30) in Bezug auf die Zugmaschine (12) mindestens zwei Abstandssensoren (52, 58) umfasst, wobei jeder Abstandssensor einen Abstand (L1, L2) zwischen der Zugmaschine und dem Anhänger misst, und dass die Steuereinheit (22) den Drehwinkel (β) des Anhängers (30) in Bezug auf die Zugmaschine (12) anhand der Abstände (L1, L2) berechnet, die von den Abstandssensoren (52, 58) der Messvorrichtung (50) gemessen werden.

3. Steuerverfahren einer Fahrvorrichtung (10) nach Anspruch 1, **dadurch gekennzeichnet, dass** die Vorrichtung (50) zum Messen des Drehwinkels (β) des Anhängers (30) in Bezug auf die Zugmaschine (12) einen Winkelsensor umfasst, der in der Kupplung (38) angeordnet ist.

4. Steuerverfahren einer Fahrvorrichtung (10) nach einem der Ansprüche 1 bis 3, **dadurch gekennzeichnet, dass** in Schritt e) die Korrektur des Fahrkurses des Anhängers (30) durch den Elektromotor (36) von jedem Antriebsrad (34) erfolgt, indem ein Antriebsmoment oder ein Bremsmoment auf das Antriebsrad angewendet wird.

5. Steuerverfahren einer Fahrvorrichtung (10) nach einem der Ansprüche 1 bis 4, **dadurch gekennzeichnet, dass** die Schritte a) bis e) von der Steuereinheit (22) in Echtzeit durchgeführt werden.

6. Steuerverfahren einer Fahrvorrichtung (10) nach einem der Ansprüche 1 bis 5, **dadurch gekennzeichnet, dass** die Schritte a) bis e) ohne Eingreifen eines Fahrers der Zugmaschine (12) der Fahrvorrichtung (10) durchgeführt werden.

## Claims

1. Method for controlling a rolling assembly (10), the rolling assembly (10) comprising at least:
- a towing vehicle (12) comprising at least two steered wheels (16) and a sensor (20) for the steering angle (α) of the steered wheels; and
- a trailer (30) configured to be coupled to the towing vehicle by means of a hitch (38), the trailer comprising at least two drive wheels (34), each drive wheel comprising an electric motor (36) controlled by a control unit (22),
the rolling assembly (10) also comprising a device (50) for measuring the angle of rotation (β) of the trailer (30) relative to the towing vehicle (12),
the control unit being configured to correct the trajectory of the trailer (30) by modifying the control command for the electric motor (36) of each drive wheel (34) of the trailer as a function of the steering angle (α) of the steered wheels (16) of the towing vehicle (12) and as a function of the angle of rotation (β) of the trailer relative to the towing vehicle,
this control method being executed by the control unit (22) and comprising at least the following steps:
a) measuring the steering angle (α) of the steered wheels (16) of the towing vehicle (12) of the rolling assembly (10);
b) determining the trajectory of the towing vehicle (12).
c) measuring the angle of rotation (β) of the trailer (30) relative to the towing vehicle (12);
d) determining the trajectory of the trailer (30) of the rolling stock (10); and
e) correcting the trajectory of the trailer (30) on the basis of the trajectories determined in steps b) and d).
**characterised in that** the control method is implemented when the rolling assembly (10) is moving in reverse, so that the trailer (30) anticipates the trajectory of the towing vehicle (12).

2. Method for controlling a rolling assembly (10) according to claim 1, **characterised in that** the device (50) for measuring the angle of rotation (β) of the trailer (30) relative to the towing vehicle (12) comprises at least two distance sensors (52, 58), each distance sensor measuring a distance (L1, L2) between the towing vehicle and the trailer, and **in that** the control unit (22) calculates the angle of rotation (β) of the trailer (30) relative to the towing vehicle (12) from the distances (L1, L2) measured by the distance sensors (52, 58) of the measuring device (50).

3. Method for controlling a rolling assembly (10) according to claim 1, **characterised in that** the device (50) for measuring the angle of rotation (β) of the trailer (30) relative to the towing vehicle (12) comprises an angle sensor arranged in the towing attachment (38).

4. Method for controlling a rolling assembly (10) according to any one of claims 1 to 3, **characterised in that** in step e), the correction of the trajectory of the trailer (30) is effected by the electric motor (36) of each drive wheel (34) by applying a driving torque or a braking torque to the said drive wheel.

5. Method for controlling a rolling assembly (10) according to any one of claims 1 to 4, **characterised in that** steps a) to e) are implemented in real time by the control unit (22).

6. Method for controlling a rolling assembly (10) according to any one of claims 1 to 5, **characterised in that** steps a) to e) are implemented without the intervention of a driver of the towing vehicle (12) of the rolling assembly (10).
